# EUROPEAN PATENT SPECIFICATION

(11) **EP 1 624 287 B1**
(45) Date of publication and mention of the grant of the patent: **08.04.2015**
(21) Application number: 04015882.6
(22) Date of filing: 06.07.2004
(51) Int. Cl.: G01C 21/26, G06F 21/00

(54) **Data security system for a vehicle navigation system and method for transmitting navigation data to the vehicle navigation system**
Datensicherheitssystem für ein Fahrzeugnavigationssystem und Verfahren zur Datenübertragung zum Fahrzeugnavigationssystem
Système de protection de données pour un système de navigation d'un véhicule et procédé pour transmettre des données au système de navigation du véhicule

(43) Date of publication of application: 08.02.2006
(73) Proprietor: Harman Becker Automotive Systems GmbH, 76307 Karlsbad (DE)
(72) Inventor: Hellmich, Jürgen, 22043 Hamburg (DE); Altiparmak, Normen, 21357 Wittdorf (DE); Koslowski, Lars, 24558 Henstedt-Ulzburg (DE)
(74) Representative: Bertsch, Florian Oliver

(56) References cited:
- EP-A- 1 189 409
- EP-A2- 1 219 930
- US-A- 5 787 170
- US-A1- 2002 069 360
- US-A1- 2003 084 313

## Description

### Background of the invention

The invention relates to a data security system for a vehicle navigation system and to a method for transmitting navigation data from a data memory to a data storing unit of a vehicle navigation system. Navigation systems are available that provide end users (such as drivers of vehicles in which the navigation system is installed) with various navigation functions and features. The navigation systems can determine a route from a specified starting location to a certain destination and can guide a traveler along this route. The navigation system may then provide the end user with information about the optimal route to the destination in the form of instructions which identify the manoeuvres for the end user to travel from the present location to the destination location.

In order to provide these navigation functions or other functions, the navigation system uses detailed data bases comprising map data which represent physical features in a geographic region, the data base including data representing the roads and intersection in a geographic region. The data base may also comprise information about turn restrictions at intersections, speed limits along the roads, street names of the various roads, points of interest (POI), information about monuments, hotels, restaurant, and so on. These navigation data are normally provided on a data memory, e.g. a CD-ROM disk which is inserted into the navigation system. Recently the use of fixed disks or hard disks permanently arranged in the navigation system has become popular.

However, after a certain amount of time, the navigation data which form the basis for calculating a route to the destination location have to be updated, since in the meantime data do not correspond to the reality in the geographic region any more, because routes may have changed or new streets may have been built, or street names or POI data may have changed. When a CD-ROM disk is used, the end user gets a new CD-ROM disk comprising the new data. In the case of a hard disk or fixed disk the end user is provided with a data memory comprising the new updated navigation data which have to be transmitted to the fixed disk of the navigation system. When the navigation data have been transmitted to the hard disk of the navigation system, the data memory is not necessary any more for the functioning of the navigation programs. As a consequence, the data memory with the update data could be used several times in order to update several different navigation systems. However, this is normally prohibited by law, since, when buying the update navigation data, the end user is only allowed to use the update data on one navigation system or on one vehicle.

EP 1 189 409 A2 discloses a method for encrypted distribution of geographic data for navigation systems in which the data are divided into two parts with one part being already stored in the navigation system, the other part being stored in another location, wherein an authorisation server enables the transfer of the other part to the data already provided in the navigation system.

EP 1 219 930 A2 discloses a data processing apparatus wherein two different passwords are used to distribute navigation updates to a navigation system.

US 2003/0084313 A1 discloses a map data processing method in which new map data are stored on a memory card, wherein a kiosk terminal, where the new map data are bought, will use the serial number of the memory card to encrypt the map data stored on the memory card.

A need exists to ensure that update navigation data to be transmitted to a fixed disk of a navigation system can only be used according to law, and that the data transfer to the fixed disk of the navigation system can be controlled easily.

### Summary of the invention

These needs are met by a method and a system as mentioned in the independent claims. Preferred embodiments of the invention are described in the dependent claims.

In order to respond to the above concerns, according to one aspect of the invention there is provided a data security system for a vehicle navigation system, comprising an enabling/ disabling means for enabling or disabling a data transfer from a data memory comprising navigation data to be transmitted to a data storing unit of the navigation system. The data security system further comprises means for identifying a vehicle or a navigation system identification code. Furthermore, a comparison unit is provided for comparing a vehicle or a navigation system identification code stored on the enabling/disabling means to the respective identification code of the vehicle or navigation system identified by the means for identifying the identification code, the enabling/disabling means enabling or disabling the data transfer in dependence on the comparison. Due to the fact that the identification code of the vehicle or of the navigation system is identified and then compared to the identification code stored on the enabling/disabling means, the navigation data can only be used in combination with one single navigation system or one vehicle in which the navigation system is used.

When the identification code of the vehicle or the navigation system is stored on the enabling/ disabling means, the navigation data can only be used in combination with this vehicle or this navigation system and cannot be copied on different navigation systems. The copying of update navigation data from one single data memory to multiple independent navigation systems can, therefore, be prevented.

According to the invention the enabling/disabling means enables the data transfer to the data storing unit, if the two vehicle identification codes or the two navigation system identification codes coincide, and disables the data transfer if the two vehicle identification codes or the two navigation system identification codes do not coincide. The comparison unit compares the respective identification codes and enables the data transfer to the hard disk when the identification code provided on the enabling/ disabling means and the identification code of the navigation system or the vehicle coincide. If they do not coincide, the data transfer to the data storing unit of the navigation system is not possible. According to one embodiment, the vehicle identification code will be used. The means for identifying the vehicle identification code retrieves the identification code which is normally provided on a bus system of the vehicle. When the vehicle identification code is used, the navigation data are connected to the vehicle and can only be used in combination with this vehicle. It is also possible to link the navigation data to the navigation system. In this case the navigation system identification code is retrieved from the navigation system or from the bus system provided in the vehicle and compared to the identification code stored on the enabling/ disabling means. For a higher security level it is also possible to use the vehicle and the navigation system identification code. In this case, the vehicle and the system identification code are identified and a comparison unit compares the vehicle and the navigation system identification code stored on the enabling/disabling means to the vehicle and the navigation system identification code identified by said means for identifying the identification code. In this case, the navigation data to be transmitted to the data storing unit of the navigation system can only be used in combination with a certain vehicle and a certain navigation system.

Furthermore, a control means is provided for verifying whether any vehicle or any navigation system identification code is stored on the enabling/disabling means, and wherein, if a vehicle or navigation system identification code is not stored on the enabling/disabling means, a writing unit writes the vehicle or navigation system identification code retrieved from the means for identifying the identification code in the enabling/disabling means. When the data memory has not been used before and the navigation data have not been transmitted to a data storing unit, the enabling/disabling means does not comprise any identification code. The navigation data producer or the vehicle manufacturing company does not know on what navigation system or vehicle the navigation data will be used. When the end user buys the data memory comprising the navigation data, the enabling/disabling means may be sold together with the data memory as a data security kit. When the end user wants to transmit the navigation data to the data storing unit of the navigation system, the control means first of all verifies whether any identification code is stored on the enabling/disabling means. If this is not the case, the means for identifying the identification code will retrieve the vehicle identification code or the navigation system identification code or both of them and the code will be written into the enabling/disabling means. Once the identification code is written into the enabling/disabling means, the data memory comprising the navigation data is linked to the vehicle or to the navigation system and can only be used on this navigation system or in this vehicle. This data security system of the invention allows an easy security check of the navigation data before they are transmitted to a data storing unit of the navigation system. The navigation data provider or the car manufacturing company does not need to have a central server controlling the access or copy rights of the clients. When the client as end user transmits the navigation data to the navigation system the first time, a connection between the vehicle or navigation system and the navigation data is established. These navigation data cannot be used for a second time on another vehicle or on another navigation system, so that a low cost data security system can be established which can be handled easily.

According to the invention, the data memory is a removable data memory which can be removably arranged in the navigation system, the data storing unit of the navigation system being a fixed disk. The navigation data may be provided on a CD-ROM disk or DVD or any other medium which can be connected to the navigation system in order to transmit the navigation data to the fixed disk of the navigation system. To this end the data memory is normally inserted into a reading unit of the navigation system which copies the data from the data memory to the fixed disk or hard disk of the navigation system.

According to a preferred embodiment of the invention, the navigation data to be transmitted to the data storing unit comprise map data for the navigation system. These map data may include up-to-date street maps comprising street names, turn restrictions, speed limits, additional information on restaurants, time tables, or public transport services, etc. If an older version of the navigation data is already stored on the data storing unit, the new navigation data or new map data may replace the respective older data. In the case that no navigation data are contained on the data storage unit, the navigation data are stored on the data storing unit without replacing any other data. The navigation data may also comprise 3 dimensional graphic data which can be used to produce 3 dimensional images and to display these 3 D data on the display.

Furthermore, the new version of the navigation data needs not to replace the older version. The hard disk on which the transferred navigation data could be stored could comprise several (e.g. 2) partitions. In this case the old data are stored in one partition, the new data being stored on another partition.

According to one embodiment, the enabling/ disabling means comprises a smart card. Smard cards are well known in the art and are normally chip cards comprising information which helps to identify the user of the smart card. The smart card normally comprises a storage unit and/or a microcontroller. In the present case, the smart card comprises at least a memory for storing the vehicle or navigation identification code. The smart card may further comprise a control unit controlling the different functions and steps carried out on the smart card. Depending on the use of the smart card and depending on the fact where the step of comparing the identification codes or writing the identification code on the smart card is carried out, the smart card comprises a microcontroller controlling the different steps carried out on the smart card. However, the smart card comprises at least a memory for storing the vehicle or navigation system identification code or both of them.

According to a preferred embodiment of the invention, the writing unit writes the vehicle or the navigation system identification code into the enabling/ disabling means, once the navigation data have been transferred to the data storing unit and stored therein. When the identification code is stored on the enabling/disabling means after the successful data transfer to the data storing unit, it can be guaranteed that the enabling/ disabling means is only made dependent on the vehicle or the navigation system, when the data have been successfully stored on the data storing unit. When the navigation data have not been successfully transferred to the data storing unit, the enabling/disabling means is not yet linked to a certain vehicle or certain navigation system. The navigation data are only limited to one navigation system or to one vehicle, when the data have been stored on the data storing unit and can then be used in the navigation system.

Furthermore, the enabling/disabling means stores the released number of the navigation data to be transmitted to the data storing unit and the status of the data transfer to the data storing unit. When the release number of the navigation data is also stored on the enabling/ disabling means, the latter "knows" what kind of data or what data version has been transferred to the data storing unit. Furthermore, the status of the data transfer is stored on the enabling/disabling means, that status indicating, inter alia, whether the data transfer to the data storing unit has been successful or not. Furthermore, the status information on the enabling/disabling means may comprise the time of the data transfer together with any additional information relating to the data transfer.

The data security system may further comprise an interface for connecting the enabling/disabling means to the navigation system for the data transfer to the data storing unit of the navigation system. This interface may be a read/write unit which allows the introduction of the enabling/disabling means into the read/write unit before the data transfer to the data storing unit is enabled. Then the vehicle or navigation system identification code or both of them can be retrieved from the memory of the enabling/disabling means. The communication between the enabling/disabling means and the navigation system can also be based on an interface using wireless communications. For example, the enabling/disabling means may also communicate with the navigation system by using the infrared, Bluetooth or any other technology. According to one embodiment of the invention, the enabling/disabling means has to be connected to the navigation system, before the data transfer can take place. When the enabling/disabling means is not connected to the navigation system, the data transfer is disabled as the data security system cannot verify whether the two identification codes coincide.

According to a preferred embodiment of the invention, the first data memory comprises a geographical identification code allowing the identification of the geographical area of the stored data. The geographical identification code helps to identify the areas or the country to which the data refer to. The content of the map data normally includes one or more countries, e.g., Germany, France, Italy, Spain, or the whole continent of Europe, or the USA, or any other part of the world. The geographical identification code of the data memory helps to avoid that existing navigation data provided on the fixed disk, containing, e.g., map data of the European continent, are updated with map data containing street maps of the United States of America. The geographical identification code of the data memory is compared to the geographical identification code of the existing data on the data storing unit, and the data are updated when the two identification codes coincide.

According to another embodiment of the invention, the enabling/disabling means comprises a money control unit which allows the deposition and the withdrawal of money from the enabling/disabling means. This feature can be helpful when the end user wants to update only certain data contained in the data memory. These data could relate to certain countries. When the end user wants to update only one or more countries and not all countries comprised on the data memory, the end user can choose these countries to be updated. The data security system will enable the data transfer only for the predetermined countries. When the enabling/disabling means comprises the money control unit comprising a certain amount of money, the sum corresponding to the chosen countries can be withdrawn from the money control unit. The enabling/ disabling means comprising the money control unit could be charged on terminals of the data provider of the navigation system, the end user paying only for those data he or she is really interested in. It is further possible that the end user needs certain data of certain countries only for a predetermined amount of time, e.g., for holidays. The user may want to have navigation data of a certain country for a certain amount of time, e.g., for one month. The end user may then use the enabling/disabling means comprising the money control unit, the enabling/disabling means allowing the transfer of data. When the end user is only entitled to use the data for a certain amount of time, one has to make sure that the data cannot be used after the term has expired. This can be implemented by either implementing the expiration date on the enabling/disabling device and by further implementing that the time-dependent data can only be used when the enabling/disabling means is connected to the navigation system. Furthermore, the data transferred to the data storing unit could be stored on the data storing unit in such a way that they cannot be used after the deadline.

The invention further relates to a method for transmitting navigation data from the data memory to the data storing unit of the vehicle navigation system, comprising the following steps: The data memory is connected to the navigation device in a first step, furthermore, a vehicle or navigation system identification code of the vehicle is retrieved and a vehicle or navigation system identification code stored on an enabling/disabling means connected to the navigation system is compared to the retrieved identification code and the data transfer to the storing unit of the navigation system is enabled or disabled in dependence on the comparison. The above-mentioned steps help to easily control the use of navigation data on navigation systems in a vehicle. The data transfer is only enabled when the system identification codes of the vehicle or of the navigation system coincide.

Furthermore, the method comprises the step of verifying whether any vehicle or navigation system identification code is stored on the enabling/disabling means, and, if a vehicle or navigation system identification code is not stored on the enabling/disabling means, the retrieved vehicle or navigation system identification code is written in the enabling/disabling means. With the above-mentioned steps the data update is linked to the vehicle or the navigation system. The update data on the data memory cannot be copied to different data storing units on different vehicles, once a vehicle or a navigation system identi fication code retrieved from the vehicle or navigation system has been written in the enabling/disabling means.

As mentioned above, the data transfer to the data storing unit is enabled, if the two vehicle identification codes or the two navigation system identification codes coincide, the data transfer being disabled, if the two vehicle identification codes or the two navigation system identification codes do not coincide. When the data update is completed, the release number of the data transmitted to the data storing unit and a status of the data transfer to the enabling/disabling means can be stored on the enabling/disabling means.

According to a further embodiment of the invention, the storage of the release number of the transferred data can help to ensure that only data having a release number older than the release number of the update data are updated. This may happen in the following way. First of all, the release number of the data contained in the data memory is compared to the release number of the data contained in the data storing unit of the navigation system and the data contained on the data storing unit are updated by using the data stored on the data memory, if the release number of the data contained on the data memory is more recent than the release number of the data contained on the data storing unit of the navigation system. These steps help to ensure that an upgrade of the data is made and not a downgrade. It is also possible that the user voluntarily wants to transfer navigation data to the fixed disk, which have a release number or date that is older than the date present on the fixed disk. In this case the user should be asked whether he or she wants to "downgrade" the data. If the user confirms this, the data transfer should be enabled.

According to a further embodiment of the invention, the vehicle or navigation system identification code is stored on the enabling/disabling means in an encrypted way. The storage of the identification codes in an encrypted way helps to prevent that once the identification code is stored, the fraudulent handling of an enabling/disabling means is complicated. It is more difficult to retrieve the vehicle or navigation system identification code on the enabling/disabling means and to change it to another identification code of another vehicle or another navigation system.

According to a preferred embodiment of the invention, the enabling/disabling means is connected to the navigation system during the data transfer to the data storing unit. When the enabling/ disabling means is not connected to the navigation system, the respective identification codes stored in the vehicle or navigation system and stored on the enabling/disabling means cannot be compared to each other, so that a data transfer should not be enabled. According to one embodiment, the enabling/disabling means has to be connected to the navigation system during the whole data transfer.

According to a further embodiment of the invention, a geographical identification code contained in the data stored in the data memory is compared to the geographical identification code contained in the data already stored on the data storing unit of the navigation system, wherein the data contained on the data storing unit are updated with the data stored on the data memory, if the two geographical identification codes coincide. As mentioned above, this helps to prevent that navigation data already present on a data storing unit are updated by using navigation data of a completely different geographical area.

According to another embodiment of the invention, data of a predetermined geographical area can be selected and transmitted to the data storing unit of the navigation system. With the selection of predetermined geographical area it is possible to choose only a certain part of the navigation data provided on the data storing unit. The end user of the navigation system can decide what part of the map data he or she wants to update or what other data comprised on the data storing unit he or she wants to use on the navigation system.

The selection of data of a predetermined geographical area can be combined with a "pay-per-transmit" option. This means that money provided on a money control unit is withdrawn from the money control unit in dependence of the selected geographical area. This withdrawal of money can also be made dependent on time. As mentioned above, the amount of the withdrawn money can depend on the time interval for which the selected data of a certain geographical area are used.

According to a further embodiment of the invention, the user of the navigation system is informed that the data have been transmitted to the data storing unit and stored thereon. The user then knows that the data transfer has been successfully completed and that the navigation system now works with an updated version of the navigation data.

### Brief description of the drawings

Embodiments of the present invention will now be described below with reference to the accompanying drawings, in which
Fig. 1 shows a data security system for enabling or disabling a data transfer;
Fig. 2 shows a flow chart showing the different steps for transmitting navigation data to a data storing unit of a vehicle navigation system,
Fig. 3 shows a flow chart showing the data transfer in more detail,
Fig. 4 shows a flow chart showing other details of a data transfer to the data storing unit,
Fig. 5 shows a flow chart with a further embodiment for controlling the data transfer to a navigation system of a vehicle, and
Fig. 6 shows a flow chart with the different steps of a data transfer in which the end user can choose among the data to be transferred to the navigation system.

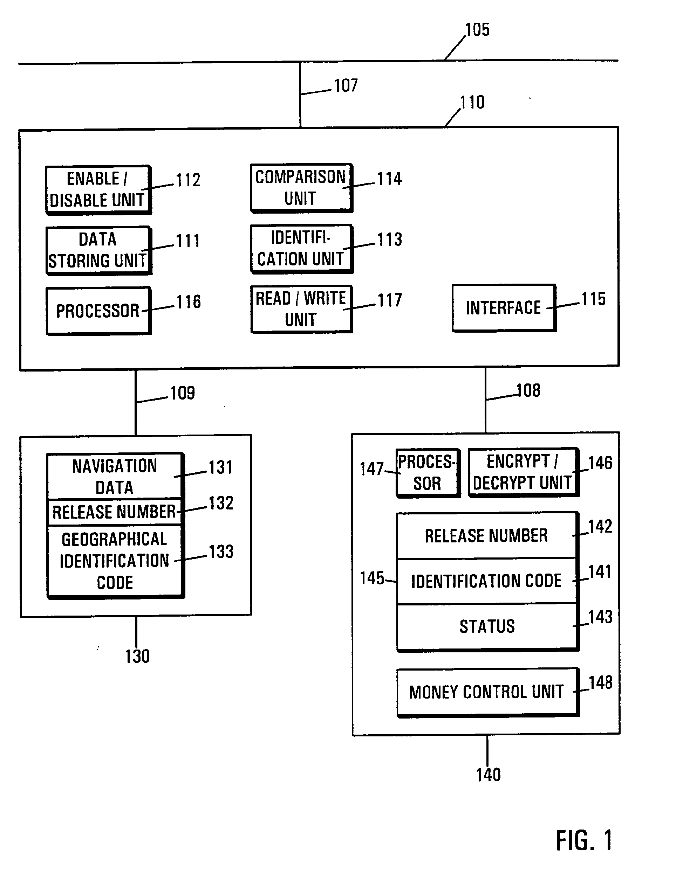

Fig. 1 is schematic view of a data security system which can be used for enabling or disabling the data transfer from a data memory to a data storing unit. A navigation system 110 of a vehicle (not shown) should be updated with navigation data provided on a data memory 130. In order to ensure that the data provided on the data memory 130 can be copied to one navigation system and not a plurality of navigation systems, an enabling/disabling unit 140 is provided. The navigation data provided on the data memory 130 are to be transferred to a data storing unit 111 of the navigation system 110. The navigation system further comprises an enabling/disabling unit 112 which enables or disables the data transfer from the data memory 130 to the data storing unit 111. Before the data transfer is enabled, an identification unit 113 retrieves the vehicle identification code provided on a bus system 105 of the vehicle to which the navigation system 110 is connected by the connection 107. In the example shown the identification unit retrieves the vehicle identification code. However, unit 113 may also retrieve the navigation system identification code of the navigation system 110. A comparison unit 114 compares the retrieved identification code to an identification code 141 stored on the enabling/disabling unit 140. In order to do so the enabling/disabling unit 140 is connected to the navigation system 110 via an interface 115 provided in the navigation system 110. The interface 115 is suitable to build up a connection to the enabling/disabling unit 140, and when a smart card is used as enabling/disabling unit 140 the interface 115 can be a reading/writing unit which is able to read the data comprised in the smart card. The connections 108, 109 of the enabling/disabling unit to the navigation system and of the data memory 130 to the navigation system may be separate connections. It should be understood that one single connection could be used to connect the data memory 130 and the enabling/disabling unit 140 to the navigation system. The connection could be wireless or could be made by wires.

When the data memory 130 is used for the first time and the data comprised therein have not yet been transmitted to the data storing unit 111, no identification code is stored on the enabling/disabling unit 140. Therefore, the control unit 116 verifies whether an identification code 141 is already present on the enabling/disabling means. If this is not the case, a read/write unit 117 writes the vehicle identification code retrieved from the identification unit 113 or the navigation system identification code into the memory 145 of the enabling/ disabling unit 140. When writing the identification code of the vehicle and the enabling/disabling unit 140, an encryption/decryption unit 146 encrypts the identification code as is known to the person skilled in the art, dealing with enabling/disabling means such as smart cards. It should be understood that the control unit 116 could also have encrypting/decrypting features. The enabling/disabling unit 140 may further comprise a microcontroller 147 in order to control the handling of the data. The enabling/disabling unit 140 needs not to have a microcontroller 147. Depending on where the respective identification codes are compared and whether the identification code is encrypted or not, the microcontroller 147 has to be provided on the enabling/disabling means 140. It is also possible that the enabling/disabling means only comprises the memory 145 containing the identification code 141, a release number 142 of the navigation data transmitted to the data storing unit 111, and the status 143 of the data transfer. The status information 143 may comprise information about when the update has been made, if the update has been successful and/or what kind of data has been transmitted, etc. The unit 140 may further comprise a money control unit 148. The money control unit 148 allows the deposition and withdrawal of money from the enabling/ disabling unit 140, as will be explained in detail later.

The data memory 130 comprises the navigation data 131 which are used for updating the data comprised on the data storing unit 111, the release number 132 of the navigation data, and a geographical identification code 133 of the data. The way of using the release number 132 and the geographical identification code 133 will be explained in detail later.

It should be understood that the navigation system comprises many other features necessary for guiding a driver of a vehicle to a predetermined destination. For the sake of clarity however only the features are shown which are important for the understanding of the invention.

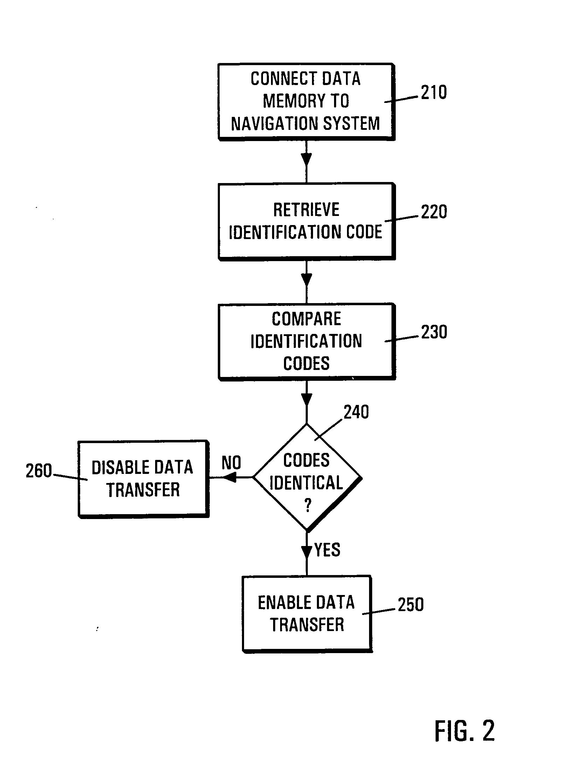

In Fig. 2 the different steps for enabling or disabling the transfer of navigation data from the data memory 130 to the data storing unit 111 is shown in more detail. In a first step 210 the data memory 130 is connected to the navigation system. The next step the vehicle identification code or the navigation system identification code is retrieved, e.g., from the bus system 105 in step 220, and in step 230 the identification code retrieved from step 220 is compared to the identification code 141 stored on the enabling/disabling unit 140. For the comparison of the two identification codes the enabling/disabling unit 140 has to be connected to the navigation system 110 via the interface 115. The data security system can be designed in such a way that for all of the steps shown in Fig. 2 the enabling/ disabling unit 140 has to be connected to the navigation system 110.

In step 240 it is decided whether the two identification codes coincide. In the affirmative case, the data transfer of the navigation data 131 is enabled in step 250. If the two identification codes provided on the enabling/disabling unit 140 and retrieved from the identification unit 130 do not coincide, the data transfer is disabled in step 260. The navigation data 131 of the data memory 130 can only be used in combination with one vehicle or one navigation device, since the data transfer is only enabled if the identification code stored on the enabling/ disabling unit 140 coincides with the identification code retrieved by the identification unit 113.

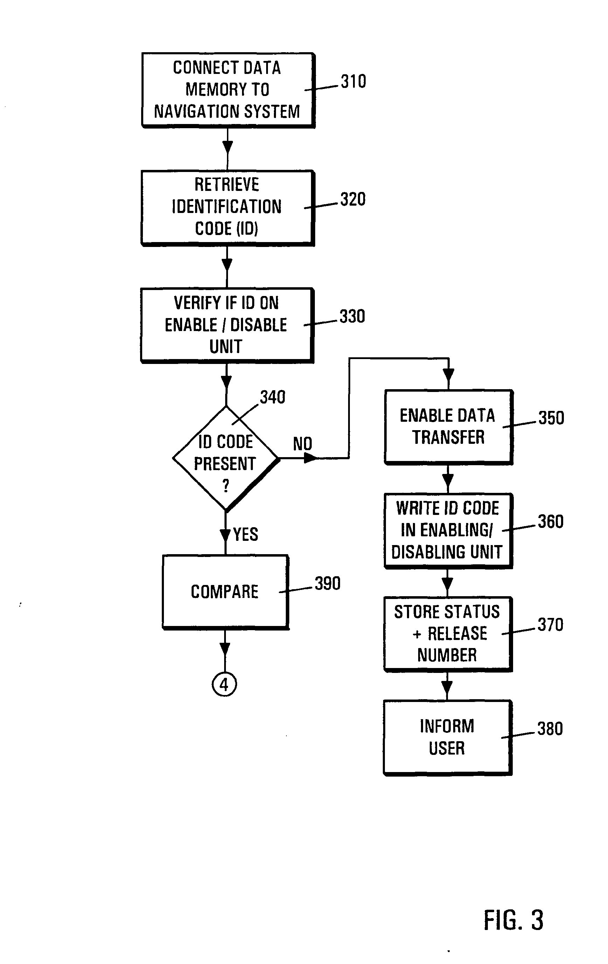

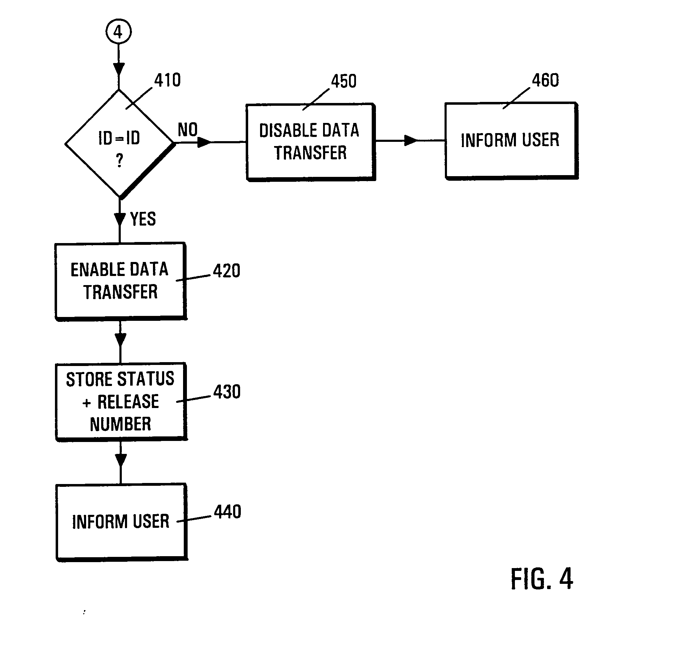

With reference to Figures 3 and 4 it is explained in detail how the identification code 141 is stored on the enabling/ disabling unit 140. When the end user purchases the data memory 130 in the form of a CD-ROM disk or DVD or any other storage medium, the end user is entitled to use the navigation data 131 contained on the data memory 130. In order to prevent the user from copying the navigation data 131 to different navigation systems comprised in different cars or vehicles, the data memory 130 is sold together with the enabling/disabling unit 140 which, at this state, is not linked to a special vehicle or a special navigation system. The enabling/disabling unit 140 does neither comprise the release number, the identification code, nor the status, if the navigation data have not yet been used. In Fig. 3 this is shown in more detail. In step 310 the data memory 130 is connected to the navigation system 110 and in step 320 either the vehicle identification code or the navigation identification code or both of them are retrieved by the identification unit 113. Steps 310 and 320 correspond to the steps 210 and 220 shown in Fig. 2. After retrieving the identification code in step 320 it is verified whether any identification code 141 is stored on the enabling/ disabling unit 140. This means that in step 340 it is asked whether an identification code (ID code) is present on the enabling/disabling unit 140. If this is not the case, it can be concluded that the data memory 130 has not been used before, i.e. the navigation data have not been transferred to a navigation unit. In this case, the data transfer is enabled in step 350 and the navigation data are transmitted to the data storing unit 111 of the navigation system 110. When the data transfer has been completed and the navigation data comprising map or any other data needed for running the navigation system are provided on the data storing unit, the retrieved identification code is written in the enabling/disabling unit in step 360. This means that the enabling/disabling unit 140 is now configured in such a way that the navigation data 131 and the enabling/ disabling unit can only be used in combination with the vehicle or the navigation system to which the identification code stored on the enabling/ disabling unit belongs. In a step 370 the status of the data transfer and the release number of the transferred data can also be stored on the enabling/disabling unit. In step 380 the user is informed that the data have been transferred to the data storing unit 111. After step 380 this navigation system can return to the other applications which are available on a navigation system. If the result of the check in step 340 was positive, i.e., if a vehicle identification code was already present on the enabling/disabling unit 140, the two identification codes are compared in step 390.

In Fig. 4 the next steps carried out after step 390 are shown. In step 410 the identification code stored on the enabling/disabling unit 140 is compared to the identification code retrieved from the identification unit 113. If the two identification codes coincide, the data transfer is enabled in step 420 and the data are transferred to the data storing unit. As an identification code was already present on the enabling/disabling unit, the data memory 130 has already been used once in combination with said vehicle or said navigation system. It is, however, possible, that the end user wants to reinstall the navigation data 131 on the navigation system. One of the reasons could be that the navigation data once transferred from the data memory 130 have been erased, and the end user wants to reinstall the data of the data memory 130. In step 430 the status and the release number are stored on enabling/disabling unit, the status comprising the information whether the data transfer has been successful or not. The status may further comprise the time of the data transfer. In step 440 the user is informed that the data transfer has been successfully completed. If the identification codes compared in step 410 do not coincide, the data transfer is disabled in step 450 and the user is informed that the data transfer from the data memory 130 to the navigation system 110 is not possible in step 460. In this case, the end user wanted to transmit the data to another navigation system or to another vehicle. However, when acquiring the data memory 130 together with the enabling/disabling unit 140, the end user normally acquired the right to use the data of the data memory 130 in combination with one hardware device.

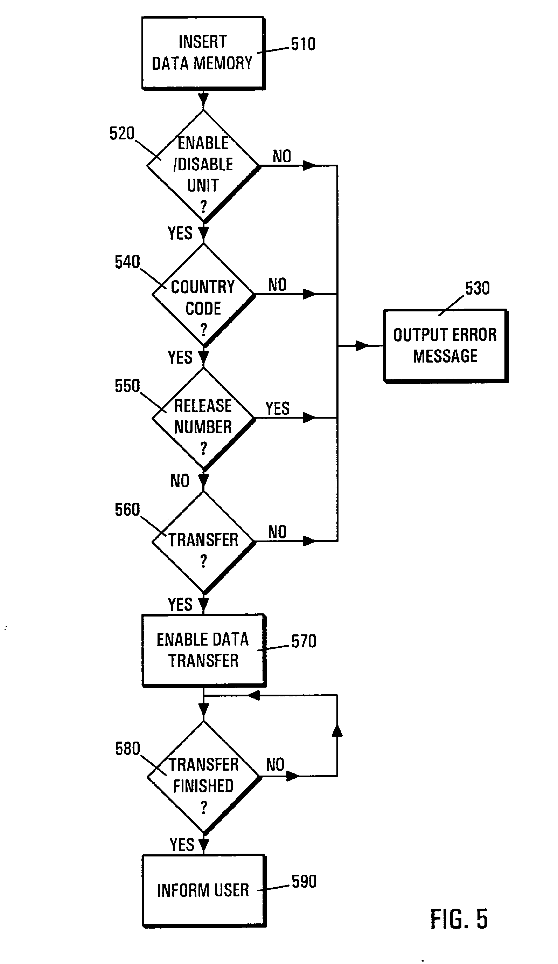

In Fig. 5 another embodiment is shown in more detail. When the end user wants to transfer the navigation data 131 to the data storing unit 111, the data memory is inserted into the read/write unit 117 in step 510, if the data memory is a CD-ROM disk. The next step 520 it is asked whether the enabling/ disabling unit is also connected to the navigation system. The data security system is configured in such a way that a data transfer is not possible when the enabling/disabling unit is not connected to the navigation system 110. If the enabling/disabling unit is not connected to the navigation system 110 a message is output to the user in step 530, the message informing the user that a data transfer without the enabling/disabling unit is not possible, or a message that the enabling/disabling unit should be connected.

If the enabling/disabling unit is connected to the navigation system, it is asked in the next step 540 whether the geographical identification code 133 stored on the data memory 130 corresponds to the geographical identification code of the data stored on the data storing unit 111, if there are any data present on the data storing unit. If there are already data present on the data storing unit, step 540 helps to prevent that the data of the data storing unit which relate to a certain geographical area are updated with data of a different geographical area. If the geographical identification codes do not coincide an error message is output in step 530, indicating that the data were not transferred to the navigation system as their geographical identification codes do not coincide. If there are no data present on the data storing unit or if the geographical identification codes coincide, it is asked in step 550 whether the release number of the data of the data memory 130 and the data of the data storing unit are identical. If these two release numbers are not identical it can be concluded that the navigation data on the data memory 130 are different to the navigation data already stored on the data storing unit 111. If the release numbers are identical, an error message could be output to the user, informing the user that the data contained on the data memory 130 are already present on the data storing unit 111. If the release numbers are not identical, the data transfer is theoretically possible and the end user is asked one more time in step 560 whether the data should be transferred to the navigation system. If the end user does not want to transfer the data he will respond with no, and an error message will inform the user that the data will not be transferred. If the answer of the end user is affirmative, the data transfer is enabled in step 570. In step 580 it is asked whether the data transfer has been completed. When the data transfer is finally completed, the user is informed that the data transfer is completed (step 590).

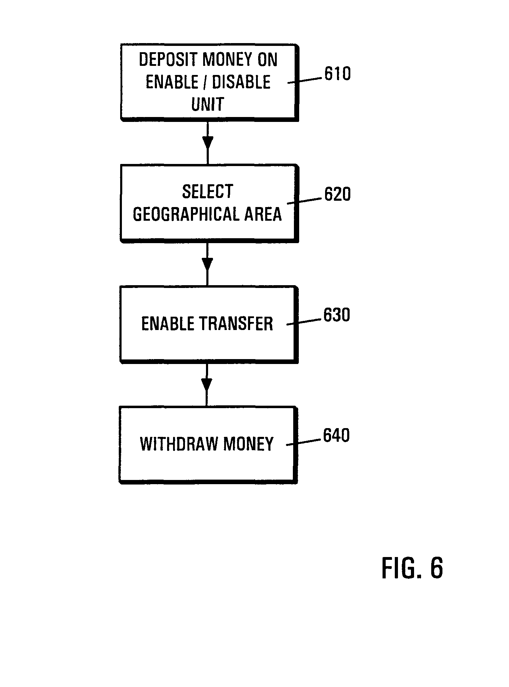

In Fig. 6 a further embodiment is shown in which the enabling/disabling unit 140 also comprises the money control unit 148 which allows to deposit or to withdraw money from the enabling/disabling means. The user can charge the money control unit on terminals provided by the data provider (step 610). If the user does not want to use all the navigation data 131 provided on the data memory 130, the user can select a certain geographical area in step 620. This could be the case when the user wants to plan a trip in a certain country and he or she only needs data of a certain country. When the end user does not want to pay for all the navigation data provided on the data memory 130, he or she selects a certain geographical area. For the selected data the transfer is enabled in step 630 and the money is withdrawn from the money control unit in step 640 depending on the selected data. It should be understood that before the data transfer is enabled in step 630, the steps shown in Figures 2 to 5 may be carried out, i.e., it is asked whether the identification codes coincide, whether the release numbers coincide, etc., or whether any identification code is present on the enabling/disabling unit. In Fig. 6 these steps are omitted for the sake of clarity. It is also possible that the selected geographical area can only be used for a certain amount of time. In this case the data transferred to the data storing unit 111 are stored on the data storing unit 111 and configured in such a way that they can only be used until the expiry data. For example, the end user may want to use navigation data of France for two or three weeks, because the end user plans to spend the vacation there. The user is able to transfer the data of France to the data storing unit, the data being configured in such a way that they can only be used for a certain amount of time. The money withdrawn from the money control unit depends on the amount of transferred data and the time the end user wants to use these data. The user can easily determine what kind of data he or she will need.

In conclusion, the present invention discloses a data security system which allows the use of data in combination with one vehicle or one navigation system. A complicated security system provided and controlled by the data provider is not needed. When the data are used for the first time, the security system is configured in such a way that the data can be used only in combination with the vehicle or the navigation system that has already been used before.

The navigation data provider or any other company can use the enabling/disabling unit to control the circulation of the navigation data needed to run a navigation system. When the end user wants to buy licenses to use the navigation data on two different vehicles, the enabling/ disabling unit can also be configured in such a way that the enabling/ disabling unit allows the storing of two different identification codes. Then, the navigation data can be used in combination with two different vehicles or navigation systems. As long as an identification code can be written into the enabling/disabling unit, the data transfer may be enabled. By determining the number of identification codes which can be stored on the enabling/disabling unit, the navigation data provider can configure the enabling/disabling unit in different ways. The end user buying an enabling/disabling unit allowing the writing of N different identification codes on it, is able to use the navigation data provided on the data memory on N different vehicles or navigation systems.

When the navigation data of the data memory are used in the nth+ 1 vehicle, it is checked whether it is still possible to write an identification code retrieved from the identification unit 113 in the enabling/ disabling means. If the memory already contains N other identification codes and the retrieved identification code does not correspond to one of the identification codes stored on the enabling/disabling unit, the data transfer is disabled.

By using enabling/disabling units with the possibility of storing more than one identification code, the data provider can easily control its licensing policy and can determine the number of vehicles or navigation systems with which the navigation data can be used.

The end user can only use the navigation data on different vehicles as often as he or she is entitled to do so. The end user buys a certain amount of licenses by buying the navigation data in combination with an enabling/ disabling unit allowing the storage of said amount of identification codes.

## Claims

1. Data security system for a vehicle navigation system (110), comprising:
- enabling/disabling means (140) for enabling or disabling a data transfer from a data memory (130) comprising navigation data (131) to be transmitted to a data storing unit (111) of the navigation system, wherein the data memory (130) is a removable data memory which can be removably arranged in the navigation system (110), the data storing unit (111) of the navigation device being a fixed disk,
- means (113) for identifying a vehicle or navigation system identification code,
- a comparison unit (114) for comparing a vehicle or navigation system identification code stored on the enabling/disabling means to the respective identification code of the vehicle or navigation system identified by the means (113) for identifying the identification code, wherein the enabling/disabling means (140) enables or disables the data transfer in dependence on the comparison,
- control means (116) for verifying whether any vehicle or navigation system identification code is stored on the enabling/disabling means (140), and wherein, if a vehicle or navigation system identification code is not stored on the enabling/disabling means (140), a writing unit (117) writes the vehicle or navigation system identification code retrieved from the means for identifying the identification code in the enabling/disabling means (140), wherein the enabling/disabling means (140) stores the release number of the navigation data to be transmitted to the data storing unit and the status of the data transfer to the data storing unit, wherein the enabling/disabling means (140) enables the data transfer to the data storing unit (111) if the two vehicle identification codes or the two navigation system identification codes coincide, and disables the data transfer if the two vehicle identification codes or the two navigation system identification codes do not coincide.

2. Data security system according to any of the preceding claims,
wherein the navigation data (131) to be transmitted to the data storing unit (111) comprise map data for the navigation system.

3. Data security system according to any of the preceding claims,
wherein the writing unit (117) writes the vehicle or navigation system identification code in the enabling/disabling means (140) once the navigation data have been transferred to the data storing unit and stored on the data storing unit.

4. Data security system according to any of the preceding claims,
wherein the enabling/disabling means (140) comprises a smart card comprising a memory (145).

5. Data security system according to any of the preceding claims, further comprising an interface (115) for connecting the enabling/disabling means (140) to the navigation system (110) for the data transfer to the data storing unit (111).

6. Data security system according to any of the preceding claims,
wherein the data memory (130) comprises a geographical identification code (133) allowing the identification of the geographical area of the stored data.

7. Data security system according to any of the preceding claims,
wherein the enabling/disabling means (140) comprises a money control unit which allows to deposit and to withdraw money from the enabling/disabling means.

8. Method for transmitting navigation data from a data memory to a data storing unit of a vehicle navigation system, wherein the data memory (130) is a removable data memory which can be removably arranged in the navigation system (110), the data storing unit (111) of the navigation device being a fixed disk, comprising the following steps:
- connecting the data memory (130) to the navigation system (110),
- retrieving a vehicle or navigation system identification code of the vehicle,
- comparing a vehicle or navigation system identification code stored in an enabling/ disabling means (140) connected to the navigation system (110) to the retrieved identification code, and
- enabling or disabling the data transfer to the data storing unit of the navigation system in dependence on the comparison,
- verifying whether any vehicle or navigation system identification code is stored on the enabling/disabling means (140), and, if a vehicle or navigation system identification code is not stored on the enabling/disabling means (140), writing the retrieved vehicle or navigation system identification code in the enabling/disabling means (140) and storing a release number of the data transmitted to the data storing unit (111) and a status of the data transfer on the enabling/ disabling means, wherein the data transfer to the data storing unit (111) of the navigation system is enabled if the two vehicle identification codes or the two navigation system identification codes coincide, and the data transfer is disabled if the two vehicle identification codes or the two navigation system identification codes do not coincide.

9. Method according to claim 8, wherein the vehicle or navigation system identification code is stored on the enabling/disabling means (140) in an encrypted way.

10. Method according to claim 8 or 9, wherein the enabling/disabling means is connected to the navigation system (110) during the data transfer to the data storing unit.

11. Method according to any of claims 8 to 10, wherein a geographical identification code contained in the data stored on the data memory (130) is compared to a geographical identification code contained in the data already stored on the data storing unit of the navigation system, wherein the data contained on the data storing unit are updated with the data stored on the data memory if the two geographical identification codes coincide.

12. Method according to any of claims 8 to 11, further comprising the steps of
- comparing a release number of the data contained on the data memory (130) to the release number of the data contained on the data storing unit of the navigation system, and
- updating the data contained on the data storing unit by using the data stored on the data memory if the release number of the data contained on the data memory is more recent than the release number of the data contained on the data storing unit of the navigation system (110).

13. Method according to any of claims 8 to 12, further comprising the steps of
- selecting data of a predetermined geographical area, and
- transmitting the data of the predetermined selected geographical area to the data storing unit (111) of the navigation system (110).

14. Method according to claim 13, further comprising the step of withdrawing money from a money control unit comprised in the enabling/disabling means in dependence on the selected geographical area.

15. Method according to any of claims 8 to 14, further comprising the step of informing the user of the navigation system that the data have been transmitted to the data storing unit and stored thereon.

## Patentansprüche

1. Datensicherheitssystem für ein Fahrzeugnavigationssystem (110), umfassend:
- ein Aktivierungs-/Deaktivierungsmittel (140) zum Aktivieren oder Deaktivieren einer Datenübertragung von einem Datenspeicher (130), der Navigationsdaten (131) umfasst, die an eine Datenspeichereinheit (111) des Navigationssystems übertragen werden sollen, wobei der Datenspeicher (130) ein herausnehmbarer Datenspeicher ist, der herausnehmbar im Navigationssystem (110) angeordnet werden kann, wobei die Datenspeichereinheit (111) der Navigationsvorrichtung eine Festplatte ist,
- ein Mittel (113) zum Identifizieren eines Fahrzeug- oder Navigationssystemidentifikationscodes,
- eine Vergleichseinheit (114) zum Vergleichen eines Fahrzeug- oder Navigationssystemidentifikationscodes, der auf dem Aktivierungs-/Deaktivierungsmittel gespeichert ist, mit dem jeweiligen Identifikationscode des Fahrzeug- oder Navigationssystems, der von dem Mittel (113) zum Identifizieren des Identifikationscodes identifiziert wurde, wobei das Aktivierungs-/Deaktivierungsmittel (140) die Datenübertragung abhängig von dem Vergleich aktiviert oder deaktiviert,
- ein Steuerungsmittel (116) zum Prüfen, ob ein Fahrzeug- oder Navigationssystemidentifikationscode auf dem Aktivierungs-/Deaktivierungsmittel (140) gespeichert ist, und wobei, wenn kein Fahrzeug- oder Navigationssystemidentifikationscode auf dem Aktivierungs-/Deaktivierungsmittel (140) gespeichert ist, eine Schreibeinheit (117) den Fahrzeug- oder Navigationssystemidentifikationscode, der von dem Mittel zum Identifizieren des Identifikationscodes abgerufen wurde, in das Aktivierungs/Deaktivierungsmittel (140) schreibt, wobei das Aktivierungs-/Deaktivierungsmittel (140) die Veröffentlichungsnummer der Navigationsdaten, die an die Datenspeichereinheit übertragen werden sollen, und den Status der Datenübertragung an die Datenspeichereinheit speichert, wobei das Aktivierungs-/Deaktivierungsmittel (140) die Datenübertragung an die Datenspeichereinheit (111) aktiviert, wenn die zwei Fahrzeugidentifikationscodes der zwei Navigationssystemidentifikationscodes übereinstimmen, und die die Datenübertragung deaktiviert, wenn die zwei Fahrzeugidentifikationscodes der zwei Navigationssystemidentifikationscodes nicht übereinstimmen.

2. Datensicherheitssystem nach einem der vorangehenden Ansprüche, wobei die Navigationsdaten (131), die an die Datenspeichereinheit (111) übertragen werden sollen, Kartendaten für das Navigationssystem umfassen.

3. Datensicherheitssystem nach einem der vorangehenden Ansprüche, wobei die Schreibeinheit (117) den Fahrzeug- oder Navigationssystemidentifikationscode in das Aktivierungs-/Deaktivierungsmittel (140) schreibt, sobald die Navigationsdaten an die Datenspeichereinheit übertragen und auf der Datenspeichereinheit gespeichert wurden.

4. Datensicherheitssystem nach einem der vorangehenden Ansprüche, wobei das Aktivierungs-/Deaktivierungsmittel (140) eine Chipkarte mit einem Speicher (145) umfasst.

5. Datensicherheitssystem nach einem der vorangehenden Ansprüche, ferner umfassend eine Schnittstelle (115) zum Verbinden des Aktivierungs-/Deaktivierungsmittels (140) mit dem Navigationssystem (110) für die Datenübertragung an die Datenspeichereinheit (111).

6. Datensicherheitssystem nach einem der vorangehenden Ansprüche, wobei der Datenspeicher (130) einen geografischen Identifikationscode (133) umfasst, der die Identifikation der geografischen Region der gespeicherten Daten ermöglicht.

7. Datensicherheitssystem nach einem der vorangehenden Ansprüche, wobei das Aktivierungs-/Deaktivierungsmittel (140) eine Geldsteuereinheit umfasst, die das Hinterlegen und Abheben von Geld von dem Aktivierungs-/ Deaktivierungsmittel ermöglicht.

8. Verfahren zum Übertragen von Navigationsdaten von einem Datenspeicher an eine Datenspeichereinheit eines Fahrzeugnavigationssystems, wobei der Datenspeicher (130) ein herausnehmbarer Datenspeicher ist, der herausnehmbar im Navigationssystem (110) angeordnet werden kann, wobei die Datenspeichereinheit (111) der Navigationsvorrichtung eine Festplatte ist, folgende Schritte umfassend:
- Verbinden des Datenspeichers (130) mit dem Navigationssystem (110),
- Abrufen eines Fahrzeug- oder Navigationssystemidentifikationscodes des Fahrzeugs,
- Vergleichen eines Fahrzeug- oder Navigationssystemidentifikationscodes, der in einem Aktivierungs-/Deaktivierungsmittel (140), das mit dem Navigationssystem (110) verbunden ist, gespeichert ist, mit dem abgerufenen Identifikationscode, und
- Aktivieren oder Deaktivieren der Datenübertragung an die Datenspeichereinheit des Navigationssystems abhängig von dem Vergleich,
- Prüfen, ob ein Fahrzeug- oder Navigationssystemidentifikationscode auf dem Aktivierungs-/Deaktivierungsmittel (140) gespeichert ist, und wenn kein Fahrzeug- oder Navigationssystemidentifikationscode auf dem Aktivierungs-/Deaktivierungsmittel (140) gespeichert ist, Schreiben des abgerufenen Fahrzeug- oder Navigationssystemidentifikationscodes in das Aktivierungs-/Deaktivierungsmittel (140) und Speichern einer Veröffentlichungsnummer der Daten, die an die Datenspeichereinheit (111) übertragen werden, und eines Status der Datenübertragung auf dem Aktivierungs-/Deaktivierungsmittel, wobei die Datenübertragung an die Datenspeichereinheit (111) des Navigationssystems aktiviert wird, wenn die zwei Fahrzeugidentifikationscodes oder die zwei Navigationssystemidentifikationscodes übereinstimmen, und die Datenübertragung deaktiviert wird, wenn die zwei Fahrzeugidentifikationscodes oder die zwei Navigationssystemidentifikationscodes nicht übereinstimmen.

9. Verfahren nach Anspruch 8, wobei der Fahrzeug- oder Navigationssystemidentifikationscode auf verschlüsselte Weise auf dem Aktivierungs-/Deaktivierungsmittel (140) gespeichert wird.

10. Verfahren nach Anspruch 8 oder 9, wobei das Aktivierungs-/Deaktivierungsmittel während der Datenübertragung an die Datenspeichereinheit mit dem Navigationssystem (110) verbunden wird.

11. Verfahren nach einem der Ansprüche 8 bis 10, wobei ein geografischer Identifikationscode, der in den Daten enthalten ist, die in dem Datenspeicher (130) gespeichert sind, mit einem geografischen Identifikationscode verglichen wird, der in den Daten enthalten ist, die bereits auf der Datenspeichereinheit des Navigationssystems gespeichert sind, wobei die Daten, die in der Datenspeichereinheit enthalten sind, mit den Daten, die im Datenspeicher gespeichert sind, aktualisiert werden, wenn die zwei geografischen Identifikationscodes übereinstimmen.

12. Verfahren nach einem der Ansprüche 8 bis 11, ferner folgende Schritte umfassend:
- Vergleichen einer Veröffentlichungsnummer der Daten, die in dem Datenspeicher (130) enthalten sind, mit der Veröffentlichungsnummer der Daten, die in der Datenspeichereinheit des Navigationssystems enthalten sind, und
- Aktualisieren der Daten, die in der Datenspeichereinheit enthalten sind, mithilfe der Daten, die im Datenspeicher gespeichert sind, wenn die Veröffentlichungsnummer der Daten, die in dem Datenspeicher enthalten sind, neuer als die Veröffentlichungsnummer der Daten ist, die in der Datenspeichereinheit des Navigationssystems (110) enthalten sind.

13. Verfahren nach einem der Ansprüche 8 bis 12, ferner folgende Schritte umfassend:
- Auswählen von Daten einer vorgegebenen geografischen Region und
- Übertragen der Daten der vorgegebenen ausgewählten geografischen Region an die Datenspeichereinheit (111) des Navigationssystems (110).

14. Verfahren nach Anspruch 13, ferner folgenden Schritt umfassend:
Abheben von Geld von einer Geldspeichereinheit, die in dem Aktivierungs-/Deaktivierungsmittel aufgenommen ist, abhängig von den ausgewählten geografischen Daten.

15. Verfahren nach einem der Ansprüche 8 bis 14, ferner folgenden Schritt umfassend: Informieren des Benutzers des Navigationssystems, dass die Daten an die Datenspeichereinheit übertragen und darauf gespeichert wurden.

## Revendications

1. Système de sécurité de données destiné à un système de navigation de véhicule (110), comprenant :
- un moyen d'activation/désactivation (140) servant à activer ou à désactiver un transfert de données à partir d'une mémoire de données (130) comprenant des données de navigation (131) à transmettre à une unité de stockage de données (111) du système de navigation, la mémoire de données (130) étant une mémoire de données amovible qu'on peut disposer de manière escamotable dans le système de navigation (110), l'unité de stockage de données (111) du dispositif de navigation étant un disque fixe,
- un moyen (113) servant à identifier un véhicule ou un code d'identification du véhicule ou du système de navigation,
- une unité de comparaison (114) servant à comparer un code d'identification du véhicule ou du système de navigation enregistré sur le moyen d'activation/désactivation au code respectif d'identification du véhicule ou du système de navigation identifié par le moyen (113) pour identifier le code d'identification, le moyen d'activation/désactivation (140) activant ou désactivant le transfert de données en fonction de la comparaison,
- un moyen de contrôle (116) servant à vérifier si un code d'identification du véhicule ou du système de navigation est enregistré sur le moyen d'activation/désactivation (140), et, si un code d'identification du véhicule ou du système de navigation n'est pas enregistré sur le moyen d'activation/désactivation (140), une unité d'écriture (117) écrivant le code d'identification du véhicule ou du système de navigation récupéré à partir du moyen d'identification du code d'identification dans le moyen d'activation/désactivation (140), le moyen d'activation/désactivation (140) enregistrant le numéro d'édition des données de navigation à transmettre à l'unité de stockage de données et le statut du transfert de données vers l'unité de stockage de données, le moyen d'activation/désactivation (140) activant le transfert de données à l'unité de stockage de données (111) si les deux codes d'identification du véhicule ou les deux codes d'identification du système de navigation coïncident, et désactivant le transfert de données si les deux codes d'identification du véhicule ou les deux codes d'identification du système de navigation ne coïncident pas.

2. Système de sécurité de données selon l'une quelconque des revendications précédentes, dans lequel les données de navigation (131) à transmettre à l'unité de stockage de données (111) comprennent des données de transposition destinées au système de navigation.

3. Système de sécurité de données selon l'une quelconque des revendications précédentes, dans lequel l'unité d'écriture (117) écrit le code d'identification du véhicule ou du système de navigation dans le moyen d'activation/désactivation (140) une fois que les données de navigation ont été transférées vers l'unité de stockage de données et enregistrées sur l'unité de stockage de données.

4. Système de sécurité de données selon l'une quelconque des revendications précédentes, dans lequel le moyen d'activation/désactivation (140) comprend une carte intelligente contenant une mémoire (145).

5. Système de sécurité de données selon l'une quelconque des revendications précédentes, comprenant en outre une interface (115) servant à connecter le moyen d'activation/désactivation (140) au système de navigation (110) pour le transfert de données vers l'unité de stockage de données (111).

6. Système de sécurité de données selon l'une quelconque des revendications précédentes, dans lequel la mémoire de données (130) comprend un code d'identification géographique (133) permettant l'identification de la zone géographique des données enregistrées.

7. Système de sécurité de données selon l'une quelconque des revendications précédentes, dans lequel le moyen d'activation/désactivation (140) comprend une unité de contrôle monétaire qui permet de déposer et de retirer de l'argent du moyen d'activation/désactivation.

8. Procédé de transmission de données de navigation à partir d'une mémoire de données vers une unité de stockage de données d'un système de navigation de véhicule, la mémoire de données (130) étant une mémoire de données amovible qu'on peut disposer de manière escamotable dans le système de navigation (110), l'unité de stockage de données (111) du dispositif de navigation étant un disque fixe, comprenant les étapes suivantes :
- connexion de la mémoire de données (130) au système de navigation (110),
- récupération d'un code d'identification du véhicule ou du système de navigation du véhicule,
- comparaison d'un code d'identification du véhicule ou du système de navigation enregistré dans un moyen d'activation/désactivation (140) connecté au système de navigation (110) au code d'identification récupéré, et
- activation ou désactivation du transfert de données vers l'unité de stockage de données du système de navigation en fonction de la comparaison,
- vérification si un code d'identification du véhicule ou du système de navigation est enregistré sur le moyen d'activation/désactivation (140) et, si un code d'identification du véhicule ou du système de navigation n'est pas enregistré sur le moyen d'activation/désactivation (140), écriture du code d'identification du véhicule ou du système de navigation dans le moyen d'activation/désactivation (140) et enregistrement d'un numéro d'édition des données transmises à l'unité de stockage de données (111) et d'un statut du transfert de données sur le moyen d'activation/désactivation, le transfert de données vers l'unité de stockage de données (111) du système de navigation étant activé si les deux codes d'identification du véhicule ou les deux codes d'identification du système de navigation coïncident, et le transfert de données étant désactivé si les deux codes d'identification du véhicule ou les deux codes d'identification du système de navigation ne coïncident pas.

9. Procédé selon la revendication 8, dans lequel le code d'identification du véhicule ou du système de navigation est enregistré sur le moyen d'activation/désactivation (140) d'une manière cryptée.

10. Procédé selon la revendication 8 ou 9, dans lequel le moyen d'activation/désactivation est raccordé au système de navigation (110) pendant le transfert de données vers l'unité de stockage de données.

11. Procédé selon l'une quelconque des revendications 8 à 10, dans lequel un code d'identification géographique contenu dans les données enregistrées sur la mémoire de données (130) est comparé à un code d'identification géographique contenu dans les données déjà enregistrées sur l'unité de stockage de données du système de navigation, les données contenues sur l'unité de stockage de données étant mises à jour avec les données enregistrées sur la mémoire de données si les deux codes d'identification géographique coïncident.

12. Procédé selon l'une quelconque des revendications 8 à 11, comprenant en outre les étapes suivantes
- comparaison d'un numéro d'édition des données contenues sur la mémoire de données (130) au numéro d'édition des données contenues sur l'unité de stockage de données du système de navigation, et
- mise à jour des données contenues sur l'unité de stockage de données si le numéro d'édition des données contenues sur la mémoire de données est plus récent que le numéro d'édition des données contenues sur l'unité de stockage de données du système de navigation (110).

13. Procédé selon l'une quelconque des revendications 8 à 12, comprenant en outre les étapes suivantes :
- choix de données d'une zone géographique prédéfinie, et
- transmission des données de la zone géographique prédéfinie à l'unité de stockage de données (111) du système de navigation (110).

14. Procédé selon la revendication 13, comprenant en outre l'étape de retrait d'argent d'une unité de contrôle monétaire contenue dans le moyen d'activation/désactivation en fonction de la zone géographique choisie.

15. Procédé selon l'une quelconque des revendications 8 à 14, comprenant en outre l'étape d'information de l'utilisateur du système de navigation comme quoi les données ont été transmises à l'unité de stockage de données et entregistrées sur celle-ci.
